# EUROPEAN PATENT SPECIFICATION

(11) **EP 3 505 381 B1**
(45) Date of publication and mention of the grant of the patent: **16.06.2021**
(21) Application number: 18214339.6
(22) Date of filing: 20.12.2018
(51) Int. Cl.: B60K 35/00, G01C 21/36, G02B 27/01

(54) **DISPLAY SYSTEM AND DISPLAY CONTROL PROGRAM**
ANZEIGESYSTEM UND ANZEIGESTEUERUNGSPROGRAMM
SYSTÈME D'AFFICHAGE ET PROGRAMME DE CONTRÔLE D'AFFICHAGE

(30) Priority: 27.12.2017 JP 2017251889
(43) Date of publication of application: 03.07.2019
(73) Proprietor: Alpine Electronics, Inc., Tokyo 145-8501 (JP)
(72) Inventor: Takizawa, Akihiko, Tokyo, 145-8501 (JP); Kadoya, Hdetoshi, Tokyo, 145-8501 (JP); Okino, Takaki, Tokyo, 145-8501 (JP)
(74) Representative: Schmitt-Nilson Schraud Waibel Wohlfrom Patentanwälte Partnerschaft mbB

(56) References cited:
- EP-A1- 3 031 656
- WO-A1-2017/138297
- US-A1- 2016 327 402
- US-B2- 9 694 817

## Description

The present invention relates to a display system utilizing a head-up display, and particularly relates to a system which displays a virtual marker for directing or guiding an own vehicle.

As a method for displaying information to be used for assisting a driver, a head-up display (HUD) has been used in practice. A typical HUD projects an image on a front glass or an installed screen using a projection apparatus installed in a vehicle, and a driver may visually recognize a virtual image projected as if an object exists in a real space beyond the front glass. Use of the HUD enables display of driving support information in the gaze direction, and therefore, a shift of the gaze direction of the driver may be reduced when compared with a case where the driver views a liquid crystal display or the like in a vehicle.

According to JP 2016-182891 A, when a lane change is to be made while a virtual vehicle of own vehicle is displayed by the HUD, for example, the virtual vehicle which travels on an image of an arrow mark indicating a driving course is displayed as a moving image so that a driving direction of the own vehicle is visually displayed beforehand for the driver.

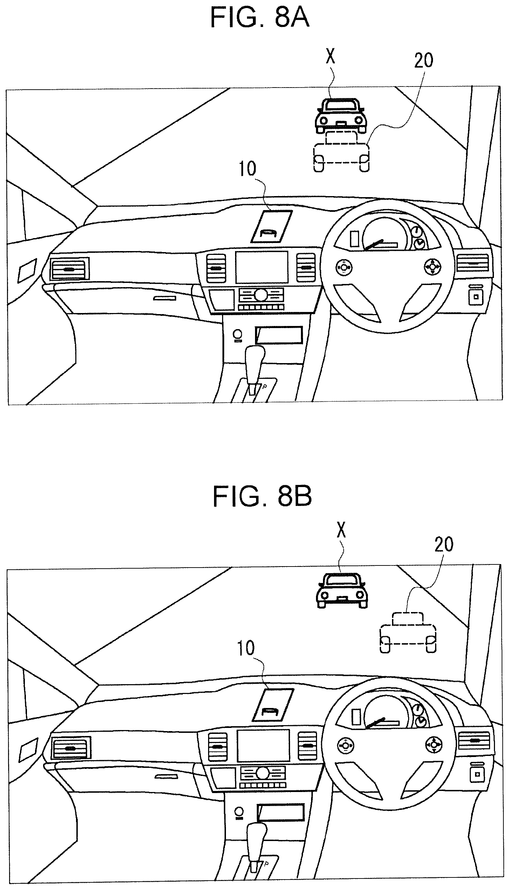

A general problem which arises when a virtual marker is displayed by the HUD will now be described. A virtual marker is displayed to guide an own vehicle in a traveling direction. A virtual marker 20 having a vehicle shape is projected on a front glass as illustrated in Fig. 8A, for example, and a driver may visually recognize a virtual image of the virtual marker 20 which overlaps with a real space in the gaze direction. The virtual marker 20 may be operated in combination with a navigation function, for example, so as to display a traveling direction, such as a right/left turn at an intersection or a lane change. The driver expects a traveling direction of the own vehicle by watching a movement of the virtual marker 20 displayed on a front portion of the own vehicle. In particular, in a case when an eyesight is not clear, such as a case of traveling at night or bad weather, the virtual marker 20 is useful information for the driver.

If a distance between a forward vehicle X and the own vehicle is constant, the driver may visually recognize the virtual marker 20 positioned between the forward vehicle X and the own vehicle. However, if an inter-vehicle distance between the own vehicle and the forward vehicle becomes small, the driver visually recognize the virtual marker 20 in a position which overlaps with the forward vehicle, and therefore, the virtual marker 20 is difficult to be viewed. To avoid this situation, visibility of the virtual marker 20 may be ensured by moving a display position of the virtual marker 20 sideward as illustrated in Fig. 8B. However, when such a process is performed, the driver may mistakenly recognize that the vehicle is traveling sideward along with the movement of the virtual marker 20 or the driver may be confused about focusing to be made on the forward vehicle X or the virtual marker 20.

WO 2017/138297 A1 discloses an image display device which includes a display unit for displaying an image, a detection unit for detecting an object present at the same position as the image or in the vicinity of the image, and a control unit for controlling the image when the object overlaps the image when viewed from the viewpoint position of a viewer looking a the image.

US 2016/327402 A1 discloses a display apparatus for a vehicle, comprising a route guiding unit, a display unit for displaying a guidance sign, and a display controller for determining a display position and a display timing of the guidance sign, depending on the route information and depending on a display area of the display unit on the driver's front view, and which causes the display unit to display the guidance sign at the determined display timing at the determined display position.

EP 3 031 656 A1 discloses an information provision device and method. FIGs. 10A-10E depict example images where images indicating the preceding vehicle approaching information change according to the following distance to the preceding vehicle.

An object of the present invention is to provide a display system having improved visibility of a virtual marker.

The invention relates to a display system and a display control program according to the appended claims. Embodiments are disclosed in the dependent claims.

A display system according to an aspect of the present invention includes a detector configured to detect a forward vehicle which is traveling in front of an own vehicle where the display system is disposable, a measurement unit configured to measure an inter-vehicle distance between the own vehicle and the forward vehicle, a projection unit configured to project an image of a virtual marker which guides a traveling direction of the own vehicle on a front glass of the own vehicle, and a controller configured to control the projection unit such that a display position of a virtual image of the virtual marker is changed depending on the inter-vehicle distance.

According to an embodiment, the controller may shift a display position of the virtual image of the virtual marker toward a near side as the inter-vehicle distance is reduced. According to another embodiment, the controller may not display a portion of the virtual image of the virtual marker when the inter-vehicle distance becomes equal to or smaller than a first value. According to a still another embodiment, the controller may not display a portion of the virtual image of the virtual marker which overlaps with the own vehicle. According to a further embodiment, the controller may not display the entire virtual image of the virtual marker when the inter-vehicle distance becomes equal to or smaller than a second value which is smaller than the first value. According to the invention, the controller changes a size of the virtual marker in a step-by-step manner in accordance with the inter-vehicle distance. According to a further embodiment, the controller may determine the size of the virtual marker based on a size of the forward vehicle detected by the detector. According to a further embodiment, the controller may not display the virtual image of the virtual marker irrespective of a degree of the inter-vehicle distance when the own vehicle is stopped. According to a further embodiment, the virtual marker may be an image indicating a vehicle shape, and a rear portion of the vehicle shape may not be displayed. According to a further embodiment, the display system may further include a detector configured to detect a gaze direction or a face direction of a driver. The controller may control a position where the virtual image of the virtual marker is displayed based on a result of the detection performed by the detector.
Fig. 1 is a block diagram illustrating a configuration of a display system according to an embodiment of the present invention;
Fig. 2 is a diagram illustrating an example of a configuration of a HUD according to an embodiment of the present invention;
Fig. 3 is a diagram illustrating a functional configuration of a display control program according to an embodiment of the present invention;
Fig. 4A is a diagram illustrating an example of display of a virtual marker by the HUD according to an embodiment;
Fig. 4B is a side view schematically illustrating the relationship between a position where the virtual marker is displayed and an inter-vehicle distance according to an embodiment;
Figs. 5A and 5B are diagrams illustrating an example of display of the virtual marker when the inter-vehicle distance is gradually reduced in the display system according to this embodiment;
Figs. 6A and 6B are diagrams illustrating the example of the display of the virtual marker when the inter-vehicle distance is gradually reduced in the display system according to this embodiment;
Figs. 7A and 7B are diagrams illustrating an example of display of a virtual marker according to another embodiment of the present invention; and
Figs. 8A and 8B are diagrams illustrating a problem which arises when a general virtual marker is displayed.

A display system according to an embodiment of the present invention includes an image projection apparatus represented by a HUD and has a function of projecting or emitting various images on a front glass or a screen of a vehicle by the HUD. A driver may visually recognize a virtual image projected by the HUD on a front glass in a gaze direction.

### Embodiment

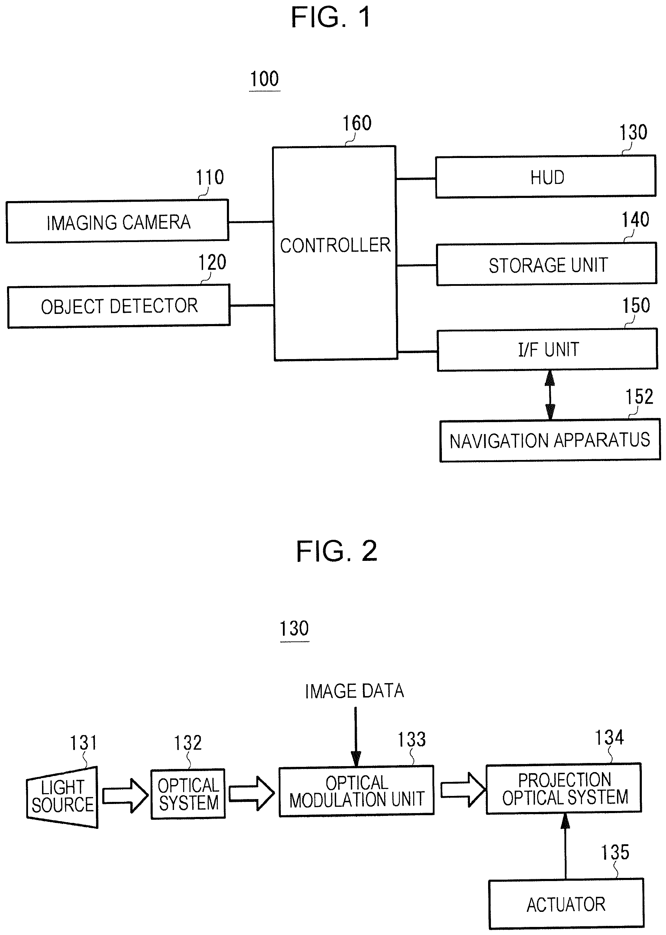

Next, an embodiment of the present invention will be described with reference to the accompanying drawings. Fig. 1 is a block diagram illustrating a configuration of a display system according to an embodiment of the present invention. A display system 100 of this embodiment includes an imaging camera 110, an object detector 120, an HUD 130, a storage unit 140, an I/F unit 150, and a controller 160.

The imaging camera 110 includes at least one in-vehicle camera which images an area in front of own vehicle in which the display system 100 is disposed. The imaging camera 110 images a forward vehicle which is traveling in front of the own vehicle and transmits data on the captured image to the controller 160. The image data is used for detection of the forward vehicle which is traveling in front of the own vehicle and a determination of a type (such as a private car, a truck, or a bus) or a size of the forward vehicle. Furthermore, the imaging camera 110 may be a stereo camera, and in this case, a distance to the forward vehicle imaged by the stereo camera may be measured.

The imaging camera 110 may image an interior space of the own vehicle and image a face of a driver. In this case, the imaging camera 110 is disposed in the vicinity of a steering or inside an instrument panel. The image data captured by the imaging camera 110 is supplied to the controller 160 which may detect the gaze direction of the driver or a direction of the face of the driver.

The object detector 120 detects presence or absence of an object near the own vehicle, a distance to such an object, and the like. Examples of the object detector 120 include a millimeter-wave radar and an infrared laser.

The HUD 130 projects an image on a front glass of the own vehicle or a screen so as to display a virtual image projected in the gaze direction of the driver. Fig. 2 is a diagram illustrating an example of a configuration of the HUD 130. The HUD 130 includes a light source 131, an optical system 132 which collects light emitted from the light source 131, an optical modulation unit 133 which modulates light supplied from the optical system 132 based on image data, a projection optical system 134 which projects an image modulated by the optical modulation unit 133, and an actuator 135 which adjusts an optical axis, a focal length, or the like of the projection optical system 134.

The optical modulation unit 133 is constituted by a liquid crystal device or a digital mirror device (DMD) including a plurality of variable mirrors disposed in a matrix, for example. The optical modulation unit 133 generates a projection image which has been optically modulated based on image data supplied from the controller 160. The controller 160 supplies image data of 30 frames or 60 frames per second to the optical modulation unit 133, for example, and the optical modulation unit 133 generates a projection image based on the consecutive image data.

In this embodiment, the controller 160 supplies image data for a virtual marker indicating a shape of a vehicle to the optical modulation unit 133, and the projection optical system 134 projects an image modulated based on the image data for the virtual marker on the front glass. When the display system 100 is connected to a navigation apparatus through the I/F unit 150, the HUD 130 projects an image generated based on image data for a virtual marker (for example, image data which guides intersections, a lane change, and a traveling speed) supplied from the navigation apparatus.

The projection optical system 134 including an optical member, such as a lens or a concave mirror, projects an image generated by the optical modulation unit 133 on the front glass. The actuator 135 adjusts a position of the lens or an angle of the mirror of the projection optical system 134, for example. According to an embodiment, the projection optical system 134 may adjust a focal length and an optical axis of the projection optical system 134 based on a control signal supplied from the controller 160 so as to vary a position and a size of a projected virtual image to be viewed by the driver. Note that the display system 100 may include a plurality of HUDs 130 which individually display projection images.

The storage unit 140 stores information required for the display system 100. The storage unit 140 may store the image data for a virtual marker projected by the HUD 130 and programs to be executed by the display system 100. According to an embodiment, the storage unit 140 may store various image data for virtual markers to be displayed in different display positions or to be displayed in different sizes so that the virtual markers are displayed in different forms depending on an inter-vehicle distance to the forward vehicle. Furthermore, the image data for a virtual marker may be image data defined on a three-dimensional coordinate instead of image data defined on a two-dimensional coordinate. The image data for a virtual marker includes at least a rear portion of the vehicle, and preferably indicates an entire vehicle from the rear portion to a front portion of the vehicle.

The I/F unit 150 enables connection between the display system 100 and an external apparatus. In this embodiment, a navigation apparatus 152 (or an electronic apparatus having a navigation function) is connected through the I/F unit 150. The navigation apparatus 152 has a function of calculating a position of the own vehicle using a global positioning system (GPS) signal or a self-contained navigation sensor (such as an acceleration sensor or an angular rate sensor), a function of displaying data on a road map in a position near the own vehicle, a function of retrieving a route from a present location to a destination and guiding the vehicle along retrieved route. The display function of the navigation apparatus 152 may include a display device, such as a liquid crystal display device, separately from the HUD 130. When the navigation apparatus 152 is connected, the controller 160 may operate in combination with the navigation apparatus 152 and display a virtual marker which guides a traveling direction, such as a right/left turn at an intersection or a lane change, based on guide information supplied from the navigation apparatus 152 when the navigation apparatus 152 guides the route to the destination.

The controller 160 controls the various units included in the display system 100, preferably includes a microcontroller including a read only memory (ROM) and a random access memory (RAM), and executes a display control program for controlling operation of the display system 100.

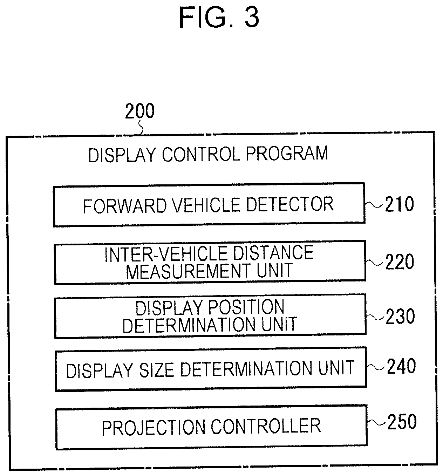

Fig. 3 is a diagram illustrating a functional configuration of the display control program according to this embodiment. A display control program 200 includes a forward vehicle detector 210, an inter-vehicle distance measurement unit 220, a display position determination unit 230, a display size determination unit 240, and a projection controller 250.

The forward vehicle detector 210 detects a forward vehicle which is traveling in front of the own vehicle based on image data captured by the imaging camera 110 and a result of a detection performed by the object detector 120. According to an embodiment, the forward vehicle detector 210 determines a size and a vehicle type of the forward vehicle based on the captured image data.

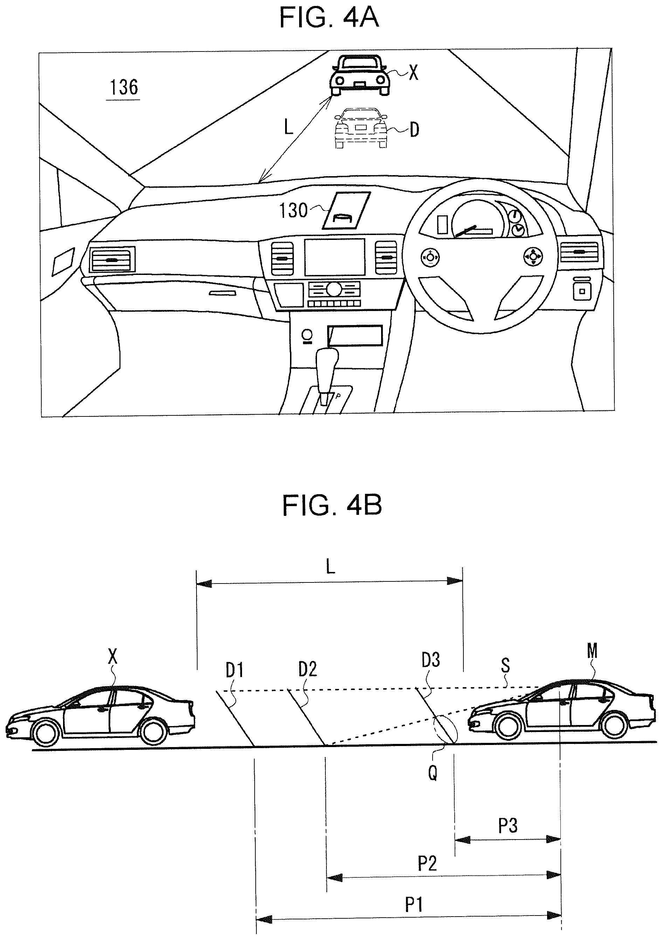

The inter-vehicle distance measurement unit 220 measures a distance between the own vehicle and the forward vehicle which has been detected based on the result of the detection performed by the forward vehicle detector 210. For example, as illustrated in Fig. 4A, when a forward vehicle X is detected, the inter-vehicle distance measurement unit 220 measures a linear inter-vehicle distance L between the own vehicle and the forward vehicle X. The inter-vehicle distance L may be calculated as a result of a detection performed by the infrared laser or the millimeter-wave radar of the object detector 120 or as a result of imaging performed by the stereo camera. The inter-vehicle distance measurement unit 220 repeatedly measures the inter-vehicle distance at a certain time interval while the forward vehicle is detected. On the other hand, the inter-vehicle distance measurement unit 220 does not measure an inter-vehicle distance when the forward vehicle detector 210 does not detect a forward vehicle.

The display position determination unit 230 determines a display position of the virtual marker based on the inter-vehicle distance measured by the inter-vehicle distance measurement unit 220. Here, the virtual marker is displayed in a position where the driver may view a virtual image D of the virtual marker projected on the front glass in the real space in the gaze direction of the driver as illustrated in Fig. 4A. The display position determination unit 230 determines the display position of the virtual marker as follows. That is, the forward vehicle approaches the own vehicle as the inter-vehicle distance is reduced, and therefore, the display position of the virtual marker shifts toward a near side such that the forward vehicle and the virtual marker do not overlap with each other. On the other hand, the forward vehicle goes away from the own vehicle as the inter-vehicle distance is increased, and therefore, the display position of the virtual marker shifts toward a far side.

The relationship between the display position of the virtual marker and the inter-vehicle distance is illustrated in Fig. 4B. An inter-vehicle distance L between an own vehicle M and a forward vehicle X is measured, and a virtual marker is displayed based on the inter-vehicle distance L. For example, the driver may view a virtual image D1 of the virtual marker in a distance P1 in a gaze direction S when the inter-vehicle distance is L1 and a virtual image D2 of the virtual marker in a distance P2 (P1> P2) when the inter-vehicle distance is L2 (L1 > L2). That is, as the inter-vehicle distance is reduced, the display position of the virtual marker shifts toward the near side in a step-by-step manner. Thereafter, when the inter-vehicle distance is reduced to L3 which is further smaller than L2 and when a virtual image D3 of the virtual marker is viewed in a distance P3 (P2 > P3), a portion Q in which the virtual image D3 of the virtual marker overlaps with the own vehicle M is generated in the gaze direction S of the driver and the overlapping portion Q is not displayed. Accordingly, display is performed as if a rear portion of the virtual marker is absorbed into the own vehicle. When the inter-vehicle distance becomes L4 which is smaller than L3 and which is equal to or smaller than a threshold value, the entire virtual image of the virtual marker overlaps with the own vehicle, and therefore, the entire virtual image of the virtual marker is not displayed as if the entire virtual marker is absorbed into the own vehicle. A position where the virtual image of the virtual marker overlaps with the own vehicle in the gaze direction S of the driver is obtained in advance based on a shape of a hood or the like of the own vehicle M, a height of the gaze direction of the driver, a size of the virtual marker, and the like. In a case where the display position of the virtual marker is changed in accordance with the inter-vehicle distance L, if the display position of the virtual marker reaches the position where the virtual image of the virtual marker overlaps with the own vehicle, a portion or all of the virtual image of the virtual marker is not displayed.

When the inter-vehicle distance is gradually increased from the state in which the virtual image of the virtual marker is in the non-display state, the virtual image of the virtual marker is displayed as if the virtual marker is popped out from the own vehicle. When a forward vehicle does not exist or when the inter-vehicle distance is equal to or larger than a certain threshold value, the display position of the virtual marker is farthest from the own vehicle. In this way, the display position of the virtual marker is controlled such that the virtual marker fades out to the own vehicle or fades in from the own vehicle in accordance with the inter-vehicle distance.

Although an arbitrary method may be employed for changing the display position of the virtual marker, a plurality of image data for different virtual markers for different inter-vehicle distances are provided and one of the image data corresponding to an inter-vehicle distance is selected according to an embodiment. The individual image data renders images of the virtual markers in determined coordinate positions in individual frames. For example, an image of a virtual marker is rendered in a coordinate position on a near side of a frame in a case of image data corresponding to a short inter-vehicle distance whereas an image of a virtual marker is rendered in a coordinate position on a far side of a frame in a case of image data corresponding to a long inter-vehicle distance. Furthermore, in a case where a portion of the virtual image of the virtual marker is not displayed, the other portion of the image of the virtual marker is rendered, whereas in a case where the entire virtual image of the virtual marker is not displayed, the image of the virtual marker is completely deleted. However, such an image of a virtual marker may be generated in real time in accordance with an inter-vehicle distance instead of such a plurality of image data provided in advance. Furthermore, as another embodiment, the controller 160 may control a projection angle and a focal length of the projection optical system 134 through the actuator 135 based on an inter-vehicle distance so as to change the display position of the virtual marker.

The display size determination unit 240 determines a size of the virtual marker based on the inter-vehicle distance. The display size determination unit 240 increases a size of the virtual marker when the forward vehicle is viewed large due to approach of the forward vehicle as the inter-vehicle distance is reduced and reduces the size of the virtual marker when the forward vehicle is viewed small as the inter-vehicle distance is increased. As a preferred embodiment, a display size of the virtual marker is controlled such that the size of the virtual marker is increased in a step-by-step manner as the inter-vehicle distance is reduced and the size of the virtual marker is reduced in a step-by-step manner as the inter-vehicle distance is increased.

Although an arbitrary method may be employed for changing a display size, in a case where image data for a virtual marker corresponding to an inter-vehicle distance is provided or generated as described above, an image size of the virtual marker rendered in a frame is differentiated depending on the inter-vehicle distance according to an embodiment. Furthermore, as another embodiment, the controller 160 may control a projection angle and a focal length of the projection optical system 134 through the actuator 135 based on the inter-vehicle distance so as to change the display size of the virtual marker.

As another preferred embodiment, the display size determination unit 240 determines a size of the virtual marker based on a size of the forward vehicle detected by the forward vehicle detector 210. For example, different types of forward vehicle (a bus, a truck, a standard-sized car, a light vehicle, a two-wheel vehicle, and the like) have different sizes even if the inter-vehicle distance is the same. If the size of the forward vehicle is large, the size of the virtual marker is large, whereas if the size of the forward vehicle is small, the size of the virtual marker is small. In this way, a feeling of strangeness caused by mismatch between the size of the forward vehicle and the size of the virtual marker may be eliminated.

The projection controller 250 controls the HUD 130 such that the virtual marker is projected in accordance with the display position determined by the display position determination unit 230 and the display size determined by the display size determination unit 240. Specifically, the projection controller 250 controls image data for the virtual marker to be supplied to the optical modulation unit 133 and controls projection of the projection optical system 134 through the actuator 135. By this, an image of the virtual marker is projected on a front glass 136 by the projection optical system 134, and the driver may visually recognize the virtual image D of the virtual marker which guides the own vehicle and which overlaps with the real space while overlap with the forward vehicle X is avoided as illustrated in Fig. 4A.

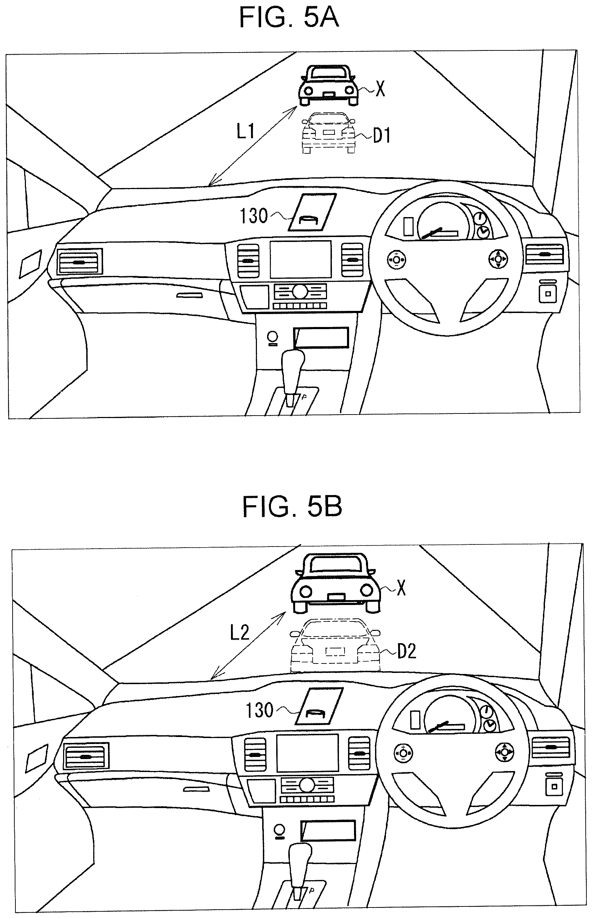

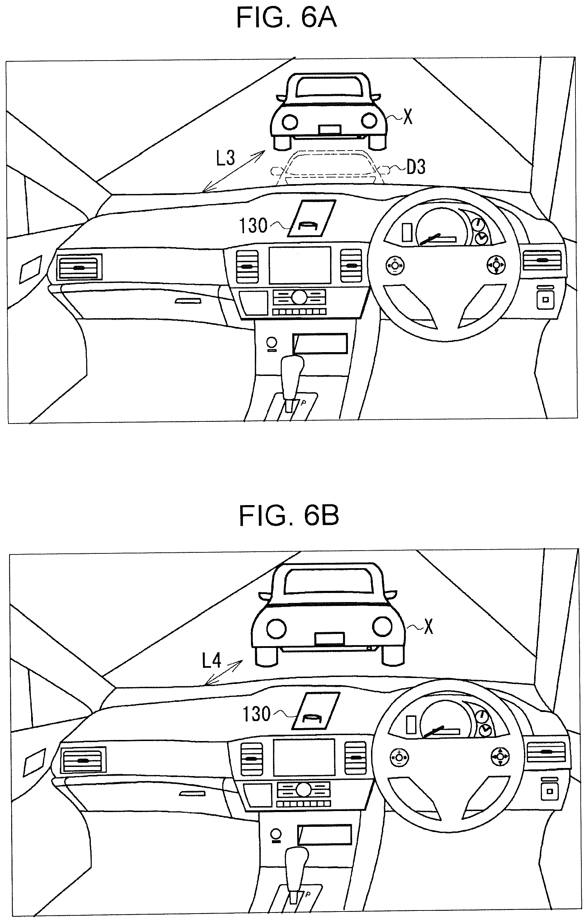

Figs. 5A and 5B and Figs. 6A and 6B are diagrams illustrating examples of display of the virtual marker when the inter-vehicle distance between the forward vehicle and the own vehicle is gradually reduced. In Fig. 5A, in a case of the inter-vehicle distance L1 between the own vehicle and the foreword vehicle X, a virtual image D1 of a virtual marker is displayed on a rear side relative to the forward vehicle X. In Fig. 5B, the inter-vehicle distance is reduced to the inter-vehicle distance L2 (L2 < L1), and accordingly, a virtual image D2 of the virtual marker is shifted to a near side of the own vehicle and a size of the virtual image D2 is considerably increased. As illustrated in Fig. 6A, when the inter-vehicle distance is further reduced to the inter-vehicle distance L3 (L3 < L2), the rear portion of a virtual image D3 of the virtual marker overlaps with the own vehicle M, and therefore, an overlapping portion of the virtual image D3 of the virtual marker is not displayed as if the virtual marker is absorbed into the own vehicle. Furthermore, as illustrated in Fig. 6B, the inter-vehicle distance is further reduced to an inter-vehicle distance L4 (L4 < L3), the entire virtual image of the virtual marker is not displayed, that is, the virtual marker disappears. On the other hand, when the inter-vehicle distance is increased, the virtual image of the virtual marker is displayed in order from Fig. 6B, Fig. 6A, Fig. 5B, and Fig. 5A.

According to this embodiment, the display position of the virtual marker is changed depending on the inter-vehicle distance between the own vehicle and the forward vehicle so that excellent visibility of the virtual marker for the driver is ensured. Furthermore, the virtual marker may fade in or fade out in accordance with the inter-vehicle distance, and accordingly, display and non-display of the virtual marker may be smoothly changed and the visibility of the virtual marker may be improved.

Note that, although the size of the virtual marker is changed in accordance with the inter-vehicle distance according to the embodiment, this is not essential and the size of the virtual marker may be constant. Furthermore, the projection controller 250 totally brings the virtual marker in the non-display state when the inter-vehicle distance L4 becomes equal to or smaller than a certain value as illustrated in Fig. 6B, and in addition, the projection controller 250 preferably brings the virtual marker into a non-display state when the own vehicle is stopped. In this case, the inter-vehicle distance between the own vehicle and the forward vehicle X is not related. When the own vehicle is stopped, the display of the virtual marker may not be useful for the driver but merely a distraction.

Next, another embodiment different from the embodiment above will be described. In this embodiment, a virtual marker is displayed taking a direction of a face or a gaze direction of a driver into consideration. The controller 160 detects the direction of the face or the gaze direction of the driver based on the image data obtained by imaging the face of the driver supplied from the imaging camera 110. The display position determination unit 230 adjusts the display position of the virtual marker taking the detected direction of the face or the detected gaze direction of the driver into consideration.

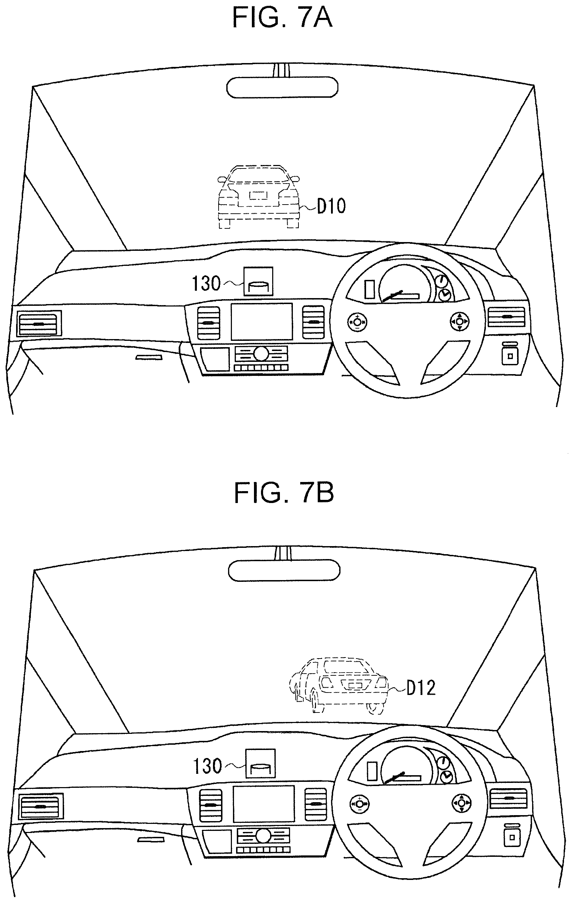

When the gaze direction of the drive indicates a forward direction, a virtual image D10 of the virtual marker is displayed in the gaze direction as illustrated in Fig. 7A. When the gaze direction of the drive indicates a rightward direction, a virtual image D12 of the virtual marker is displayed in the gaze direction as illustrated in Fig. 7B. In this case, the controller 160 supplies a three-dimensional image of the virtual marker corresponding to the virtual image D12 of the virtual marker to the optical modulation unit 133 such that a side of the vehicle of the virtual image D12 is viewed.

According to this embodiment, the three-dimensional virtual marker may be displayed in a position corresponding to the direction of the face or the gaze direction of the driver. Although the virtual marker has a shape of a vehicle, for example, in the foregoing embodiment, this is merely an example, and the virtual marker may have a shape other than a vehicle shape.

According to the present invention, a position where a virtual image of a virtual marker is displayed is variable in accordance with an inter-vehicle distance between an own vehicle and a forward vehicle so that excellent visibility of the virtual marker is ensured. Furthermore, in a case where the virtual image of the virtual marker overlaps with the own vehicle due to reduction of the inter-vehicle distance, an overlapping portion is not displayed so that visibility of the virtual marker is further improved.

Although preferred embodiments of the present invention are described in detail hereinabove, the present invention is not limited to specific embodiments and various modifications and changes may be made within the scope of the present invention according to Claims.

## Claims

1. A display system, comprising:
detection means (210) configured to detect a forward vehicle which is traveling in front of an own vehicle where the display system is disposable;
measurement means (220) configured to measure an inter-vehicle distance between the own vehicle and the forward vehicle;
projection means (130) configured to project an image of a virtual marker which guides a traveling direction of the own vehicle on a front glass of the own vehicle; and
control means (250) configured to control the projection means such that a display position of the image of the virtual marker is changed depending on the inter-vehicle distance,
**characterised in that**
the control means (250) is configured to change a size of the image of the virtual marker in a step-by-step manner in accordance with the inter-vehicle distance.

2. The display system according to Claim 1, wherein the control means is configured to shift a display position of the image of the virtual marker toward a near side as the inter-vehicle distance is reduced.

3. The display system according to Claim 1 or Claim 2, wherein the control means is configured to not display a portion of the image of the virtual marker when the inter-vehicle distance becomes equal to or smaller than a first value.

4. The display system according to Claim 3, wherein the control means is configured to not display a portion of the image of the virtual marker which overlaps with the own vehicle.

5. The display system according to Claim 3 or Claim 4, wherein the control means is configured to not display the entire image of the virtual marker when the inter-vehicle distance becomes equal to or smaller than a second value which is smaller than the first value.

6. The display system according to any of Claims 1-5, wherein the control means is configured to determine the size of the virtual marker based on a size of the forward vehicle detected by the detection means.

7. The display system according to any one of Claim 1 to Claim 6, wherein the control means is configured to not display the image of the virtual marker irrespective of a degree of the inter-vehicle distance when the own vehicle is stopped.

8. The display system according to any one of Claim 1 to Claim 7, wherein the virtual marker is an image indicating a vehicle shape, and a rear portion of the vehicle shape is not displayed.

9. The display system according to any one of Claim 1 to Claim 8, further comprising:
a detector configured to detect a gaze direction or a face direction of a driver,
wherein the control means is configured to control a position where the image of the virtual marker is displayed based on a result of the detection performed by the detector.

10. A display control program (200) comprising instructions which, when the program is executed by a computer placed in a vehicle having projection means (130), cause the computer to carry out:
detecting a forward vehicle which is traveling in front of the vehicle;
measuring an inter-vehicle distance between the vehicle and the forward vehicle;
controlling the projection means (130) to project an image of a virtual marker which guides a traveling direction of the vehicle on a front glass of the vehicle; and
controlling a display position of the image of the virtual marker depending on the inter-vehicle distance,
**characterised by**
changing a size of the image of the virtual marker in a step-by-step manner in accordance with the inter-vehicle distance.

11. The program according to claim 10, wherein the controlling the display position comprises shifting the display position of the image of the virtual marker toward a near side as the inter-vehicle distance is reduced.

12. The program according to Claim 10 or 11, wherein the changing the size of the image of the virtual marker comprises determining the size of the virtual marker based on a size of the forward vehicle.

13. The program according to any one of Claim 10 to Claim 12, the instructions further cause the computer to carry out:
detecting a gaze direction or a face direction of a driver: and
controlling a position where the image of the virtual marker is displayed based on a result of the detection of the gaze direction or the face direction.

## Patentansprüche

1. Anzeigesystem, das aufweist:
eine Detektionseinrichtung (210), die dazu ausgelegt ist, ein vorderes Fahrzeug, das vor einem eigenen Fahrzeug fährt, wo das Anzeigesystem vorgesehen ist, zu detektieren;
eine Messeinrichtung (220), die dazu ausgelegt ist, einen Abstand zwischen den Fahrzeugen zwischen dem eigenen Fahrzeug und dem vorderen Fahrzeug zu messen;
eine Projektionseinrichtung (130), die dazu ausgelegt ist, ein Bild einer virtuellen Markierung, die eine Fahrtrichtung des eigenen Fahrzeugs führt, auf eine Frontscheibe des eigenen Fahrzeugs zu projizieren; und
eine Steuereinrichtung (250), die dazu ausgelegt ist, die Projektionseinrichtung derart zu steuern, dass sich eine Anzeigeposition des Bildes der virtuellen Markierung in Abhängigkeit von dem Abstand zwischen den Fahrzeugen ändert,
**dadurch gekennzeichnet, dass**
die Steuereinrichtung (250) dazu ausgelegt ist, eine Größe des Bildes der virtuellen Markierung auf eine Schritt-für-Schritt-Weise entsprechend dem Abstand zwischen den Fahrzeugen zu ändern.

2. Anzeigesystem nach Anspruch 1, wobei die Steuereinrichtung dazu ausgelegt ist, eine Anzeigeposition des Bildes der virtuellen Markierung in Richtung einer nahen Seite zu verschieben, wenn der Abstand zwischen den Fahrzeugen verringert wird.

3. Anzeigesystem nach Anspruch 1 oder Anspruch 2, wobei die Steuereinrichtung dazu ausgelegt ist, einen Abschnitt des Bildes der virtuellen Markierung nicht anzuzeigen, wenn der Abstand zwischen den Fahrzeugen gleich oder kleiner als ein erster Wert wird.

4. Anzeigesystem nach Anspruch 3, wobei die Steuereinrichtung dazu ausgelegt ist, einen Abschnitt des Bildes der virtuellen Markierung, der mit dem eigenen Fahrzeug überlappt, nicht anzuzeigen.

5. Anzeigesystem nach Anspruch 3 oder Anspruch 4, wobei die Steuereinrichtung dazu ausgelegt ist, das gesamte Bild der virtuellen Markierung nicht anzuzeigen, wenn der Abstand zwischen den Fahrzeugen gleich oder kleiner als ein zweiter Wert wird, der kleiner als der erste Wert ist.

6. Anzeigesystem nach einem der Ansprüche 1-5, wobei die Steuereinrichtung dazu ausgelegt ist, die Größe der virtuellen Markierung auf Grundlage einer von der Detektionseinrichtung detektierten Größe des vorderen Fahrzeugs zu bestimmen.

7. Anzeigesystem nach einem von Anspruch 1 bis Anspruch 6, wobei die Steuereinrichtung dazu ausgelegt ist, das Bild der virtuellen Markierung unabhängig von einem Maß des Abstands zwischen den Fahrzeugen nicht anzuzeigen, wenn das eigene Fahrzeug angehalten wird.

8. Anzeigesystem nach einem von Anspruch 1 bis Anspruch 7, wobei die virtuelle Markierung ein Bild ist, das eine Fahrzeugform angibt, und ein hinterer Abschnitt der Fahrzeugform nicht angezeigt wird.

9. Anzeigesystem nach einem von Anspruch 1 bis Anspruch 8, das ferner aufweist:
einen Detektor, der dazu ausgelegt ist, eine Blickrichtung oder eine Gesichtsrichtung eines Fahrers zu detektieren,
wobei die Steuereinrichtung dazu ausgelegt ist, eine Position, wo das Bild der virtuellen Markierung angezeigt wird, auf Grundlage eines Ergebnisses der von dem Detektor durchgeführten Detektion zu steuern.

10. Anzeigesteuerprogramm (200), das Anweisungen aufweist, die, wenn das Programm von einem Computer, der in einem Fahrzeug mit einer Projektionseinrichtung (130) angeordnet ist, ausgeführt wird, bewirken, dass der Computer durchführt:
Detektieren eines vorderen Fahrzeugs, das vor dem Fahrzeug fährt;
Messen eines Abstands zwischen den Fahrzeugen zwischen dem Fahrzeug und dem vorderen Fahrzeug;
Steuern der Projektionseinrichtung (130) so, dass sie ein Bild einer virtuellen Markierung, die eine Fahrtrichtung des Fahrzeugs führt, auf eine Frontscheibe des Fahrzeugs projiziert; und
Steuern einer Anzeigeposition des Bildes der virtuellen Markierung in Abhängigkeit von dem Abstand zwischen den Fahrzeugen,
**gekennzeichnet durch**
Ändern einer Größe des Bildes der virtuellen Markierung auf eine Schritt-für-Schritt-Weise entsprechend dem Abstand zwischen den Fahrzeugen.

11. Programm nach Anspruch 10, wobei das Steuern der Anzeigeposition das Verschieben der Anzeigeposition des Bildes der virtuellen Markierung in Richtung einer nahen Seite, wenn der Abstand zwischen den Fahrzeugen verringert wird, aufweist.

12. Programm nach Anspruch 10 oder 11, wobei das Ändern der Größe des Bildes der virtuellen Markierung das Bestimmen der Größe der virtuellen Markierung auf Grundlage einer Größe des vorderen Fahrzeugs aufweist.

13. Programm nach einem von Anspruch 10 bis Anspruch 12, wobei die Anweisungen ferner bewirken, dass der Computer durchführt:
Detektieren einer Blickrichtung oder einer Gesichtsrichtung eines Fahrers; und
Steuern einer Position, wo das Bild der virtuellen Markierung angezeigt wird, auf Grundlage eines Ergebnisses der Detektion der Blickrichtung oder der Gesichtsrichtung.

## Revendications

1. Système d'affichage, comprenant :
un moyen de détection (210) configuré pour détecter un véhicule avant qui se déplace devant un véhicule personnel, dans lequel le système d'affichage est jetable ;
un moyen de mesure (220) configuré pour mesurer une distance entre véhicules entre le véhicule personnel et le véhicule avant ;
un moyen de projection (130) configuré pour projeter une image d'un marqueur virtuel qui guide une direction de déplacement du véhicule personnel sur une vitre avant du véhicule personnel ; et
un moyen de commande (250) configuré pour commander le moyen de projection de telle sorte qu'une position d'affichage d'une image du marqueur virtuel est modifiée en fonction de la distance entre véhicules,
**caractérisé en ce que**
le moyen de commande (250) est configuré pour changer une taille de l'image du marqueur virtuel de manière progressive en fonction de la distance entre véhicules.

2. Système d'affichage selon la revendication 1, dans lequel le moyen de commande est configuré pour déplacer une position d'affichage de l'image du marqueur virtuel vers un côté proche lorsque la distance entre véhicules est réduite.

3. Système d'affichage selon la revendication 1 ou la revendication 2, dans lequel le moyen de commande est configuré pour ne pas afficher une partie de l'image du marqueur virtuel lorsque la distance entre véhicules devient égale ou inférieure à une première valeur.

4. Système d'affichage selon la revendication 3, dans lequel le moyen de commande est configuré pour ne pas afficher une partie de l'image virtuelle du marqueur virtuel qui recouvre partiellement le véhicule personnel.

5. Système d'affichage selon la revendication 3 ou la revendication 4, dans lequel le moyen de commande est configuré pour ne pas afficher l'image entière du marqueur virtuel lorsque la distance entre véhicules devient égale ou inférieure à une deuxième valeur qui est inférieure à la première valeur.

6. Système d'affichage selon l'une quelconque des revendications 1 à 5, dans lequel le moyen de commande est configuré pour déterminer la taille du marqueur virtuel sur la base d'une taille du véhicule avant détectée par le moyen de détection.

7. Système d'affichage selon l'une quelconque des revendications 1 à 6, dans lequel le moyen de commande est configuré pour ne pas afficher l'image du marqueur virtuel indépendamment d'un degré de la distance entre véhicules, lorsque le véhicule personnel est arrêté.

8. Système d'affichage selon l'une quelconque des revendications 1 à 7, dans lequel le marqueur virtuel est une image indiquant une forme de véhicule, et une partie arrière de la forme du véhicule n'est pas affichée.

9. Système d'affichage selon l'une quelconque des revendications 1 à 8, comprenant en outre :
un détecteur configuré pour détecter une direction du regard ou une direction du visage d'un conducteur,
dans lequel le moyen de commande est configuré pour contrôler une position où l'image du marqueur virtuel est affichée sur la base d'un résultat de la détection effectuée par le détecteur.

10. Programme de contrôle de l'affichage (200) comprenant des instructions qui, lorsque le programme est mis en œuvre par un ordinateur placé dans un véhicule ayant un moyen de projection (130), font en sorte que l'ordinateur exécute :
une détection d'un véhicule avant qui se déplace devant le véhicule ;
une mesure d'une distance entre véhicules entre le véhicule et le véhicule avant ;
une commande du moyen de projection (130) afin de projeter une image d'un marqueur virtuel qui guide une direction de déplacement du véhicule sur une vitre avant du véhicule, et
une commande d'une position de l'affichage de l'image du marqueur virtuel en fonction de la distance entre véhicules,
**caractérisé par**
un changement d'une taille de l'image du marqueur virtuel de manière progressive en fonction de la distance entre véhicules.

11. Programme selon la revendication 10, dans lequel la commande de la position de l'affichage comprend un déplacement de la position d'affichage de l'image du marqueur virtuel vers un côté proche lorsque la distance entre véhicules est réduite.

12. Programme selon la revendication 10 ou 11, dans lequel le changement de la taille de l'image du marqueur virtuel comprend une détermination de la taille du marqueur virtuel sur la base d'une taille du véhicule avant.

13. Programme selon l'une quelconque des revendications 10 à 12, les instructions faisant en outre en sorte que l'ordinateur mette en œuvre :
une détection d'une direction du regard ou d'une direction du visage d'un conducteur ; et
une commande d'une position où l'image du marqueur virtuel est affichée sur la base d'un résultat de la détection de la direction du regard ou de la direction du visage.
